# EUROPEAN PATENT SPECIFICATION

(11) **EP 2 079 948 B1**
(45) Date of publication and mention of the grant of the patent: **21.05.2014**
(21) Application number: 07848135.5
(22) Date of filing: 06.11.2007
(51) Int. Cl.: F16K 31/05, F16K 31/50, F16K 1/02, F16K 31/14, F16K 31/16

(54) **DEVICE FOR OPENING/CLOSING VALVES OR SIMILAR**
VORRICHTUNG ZUR ÖFFNUNG/SCHLIESSUNG VON VENTILEN ODER ÄHNLICHEM
DISPOSITIF POUR L'OUVERTURE ET LA FERMETURE DE VALVES, OU SIMILAIRES

(30) Priority: 07.11.2006 FI 20060977
(43) Date of publication of application: 22.07.2009
(73) Proprietor: Solantie, Juha, 00630 Helsinki (FI)
(72) Inventor: Solantie, Juha, 00630 Helsinki (FI)
(74) Representative: Langenskiöld, Tord Karl Walter
(86) International application number: PCT/FI2007/000266
(87) International publication number: WO 2008/056022

(56) References cited:
- GB-A- 419 122
- GB-A- 2 266 560
- US-A- 3 994 178
- US-A- 4 527 715
- US-A- 4 629 157
- US-A- 4 994 001
- US-A- 5 257 771
- US-A- 6 065 735
- US-A1- 2002 096 213

## Description

The present invention relates to a device for opening or closing valves or similar.

Manually-operated valves are of very many different types and very many size classes. The smallest control very small flows, whereas in various production plants really massive valves are used, the operation of which demands work requiring great strength, especially if the valves are used relatively infrequently, or the process conditions are such that they may jam shut, and they cannot be closed/opened easily with the strength of one man.

In larger production plants, there may be hundreds of valves, so that it is easy to understand that during extensive operations there is a great deal of work in closing and opening valves. Particularly if valves are only used, for example, during annual service or longer breaks in production, there may be numerous valves that have jammed shut and therefore require a great deal of extra work. Turning the valve is work demanding physical strength, but it is also work associated with a considerable risk of causing various stress injuries etc. Strong torsional movements often lead to sprains of some degree and similar injuries. In addition, these operations take much time, which is away from productive work.

A quite common valve construction is a so-called slide valve, in which the rotation of a handwheel causes the valve spindle to rise and fall, when the slide attached to it correspondingly opens and closes the flow channel. Between the spindle and the handwheel there is a threaded joint, through which a linear movement is transmitted to the spindle when the handwheel is rotated.

In large valves, the diameter of the handwheel can be in the order of even a metre. While this of course provides plenty of force for the rotation, nevertheless the force is often too little to perform the work smoothly and correspondingly the work takes place more slowly.

In the art, some attempts to use motor-powered tools to open/close valves are known. For example, a device is known, in which a counter-piece, through which rotation takes place, is fitted specifically and permanently to each valve. One known alternative uses a power drill or similar external additional device as an aid to rotation. It is obvious that in large plants there are numerous different types of valves. In order for there to be a suitable specific drive head for all the valves used, these would have to be many in number, and their permanent installation in each valve or changing them from one valve to another, and particularly carrying a large arsenal of them, would in practice cause very great difficulties.

In US patent application No. 2002/0096213, a device for opening and closing valves is disclosed. The device may be connected to a valve and comprises a rotatable coupler connectable to a handwheel on the valve using bolts and nuts.

In US patent 6,065,735, a retrofittable electric valve operating mechanism is disclosed, which can be attached to a manual valve while allowing the manual feature to be utilized. A valve handle engaging member on the operating mechanism is provided with elongate tongs designed to engage valve handles of various types.

The present invention is intended to create a device for opening/closing valves, the suitability of which device for different types of valve is ensured and which can be used where suitable operating power, particularly compressed air can be found. The construction of the device according to the invention is designed to take account of both usability and work safety. At the same time, the device is nevertheless simple and economical to manufacture.

The aforementioned and other benefits and advantages of the present invention are achieved in the manner described as characteristic in the accompanying Claims.

In the following, the invention is examined in greater detail with reference to the accompanied drawings, which show one well-regarded embodiment of the invention.

Thus:
Figure 1 shows a direct side view of the device according to the invention and
Figure 2 shows the same device seen at an angle.

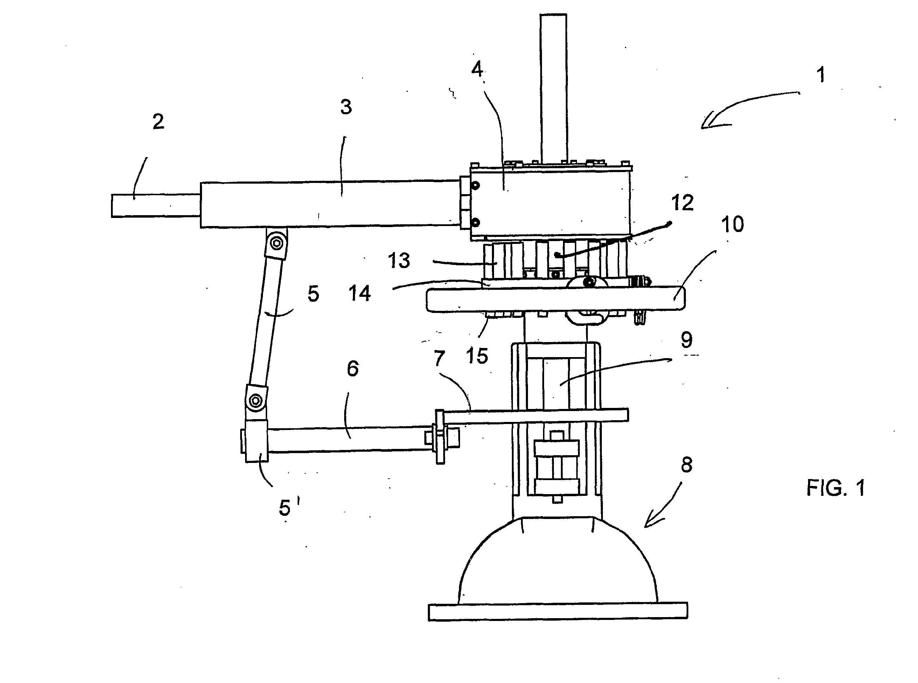

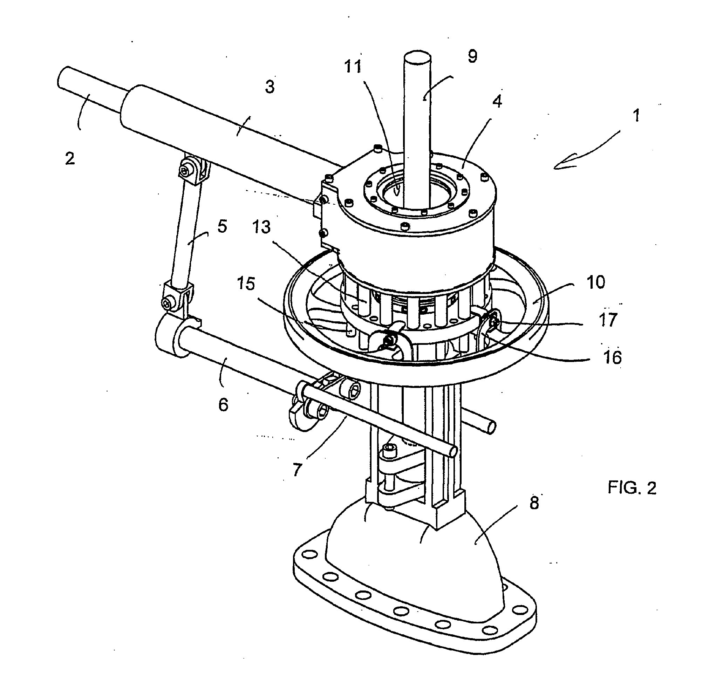

The figures, which can be examined in parallel for better illustration, thus show one embodiment of the invention, which is naturally only an example of several embodiments according to the inventive idea coming within the scope of protection of the invention. In Figures 1 and 2 the device is in the working position connected to a valve, in order to close/open it.

Thus, the main components of the device 1 are the following: An inlet connection 2 to bring operating power, mainly compressed air, to the device 1. On the other hand, instead of an inlet connection, there could be, for example, an electrical connection for operating the device with the aid of an electric motor. In order to facilitate handling, the device can typically include an arm component 3 of a suitable length. A suitable operating switch is located in a practical place, especially in connection with the arm 3. The actual torsion head is marked with the reference number 4.

If necessary, arms 5 and 6 are used in the device according to the invention, of which at the end of the latter there is an attachment element 7, which is set to rest on the valve body, in such a way that the valve body supports it between or around its components. In the best case, the distance between the components of the attachment element can be adjusted to be suitable for different constructions and can be locked in their positions. The arm 6 is preferably of an adjustable length, for example, in such a way that the arm 6 runs through a loop or eye 5' at the end of the arm 5 in such a way that it slides and can be locked in the desired position. It is obvious that there is a numerous group of adjustable arm constructions, so that the most appropriate of them is selected for use in connection with the invention. By means of this arrangement, manual control of the torsional forces is unnecessary, though when handling valves in normal conditions, which they do not jam badly, use of this arrangement is not needed.

The operating power, for example a pressure medium, is brought from the connector 2 to the motor or similar creating a rotation motion in the torsion head 4, and which produces torque, which is transmitted to the shaft of the torsion head. Rotation takes place alternatively clockwise or counter-clockwise, depending on whether it is wished to use the device for opening or closing.

The valve itself can be formed of a valve body 8, a valve spindle 9, and a handwheel 10. Depending on the type of valve, the structures can vary a great deal, the problems described above being particularly caused by variations in the construction of the handwheel. In the handwheel 10 there can be two or more spokes, the shape of which can vary, so that according to the present invention the intention is to create a device model that will fit all constructions. Because, as shown in the figures, the spindle 9 often rises above the handwheel 10 when opening, the device must adapt to this construction too. The valve as such naturally does not belong to the scope of protection of the present invention.

The torsion head 4 is formed of a body and a rotating totality mounted on it by bearings, which is operated by the operating force transmitted to it from the drive machine. The actual rotation mechanism is not described in greater detail here, because rotating pneumatic tools, for example, embody entirely conventional technology. Most usually the rotational mechanisms are based on interlocking gear wheels. In fact, the torsion head is ring-shaped, so that the valve spindle 9 can be fitted through the opening 11 remaining in the centre of the torsion head 4. The opening 11 is sufficiently wide for any spindle 9 whatever in normal use to fit through it freely.

In this embodiment, a hollow shaft 12, to which is connected an essentially discoid component 14 with a hole concentric with the shaft and which hereinafter is referred to an the drive wheel, runs through the torsion head 4. A desired number of collars 13 are, in turn, attached to the upper side of the discoid component 14. Pins 15, which are made to protrude from inside the collars 13 particularly by spring loading, protrude from the plane of the undersurface of the disc 14. When an inwards pressing force acts on the pins 15, they retract inside the collars 13 against the spring force. The collar-pin combinations 13, 15 rotate along with the discoid drive wheel 14, when the shaft 12 rotates it.

With the aid of the pins 15, a situation is created, in which the device according to the invention fits any spoke distribution whatever that may be in the handwheel 10. The pins that coincide with the spokes of the handwheel retract. However, those that coincide with a free space remain protruding and can press against the spoke of the handwheel to receive the lateral torsional forces acting on them during rotation. The pins 15 are further supported in the direction of the torsional force on the drive wheel 14, penetrating its openings.

Reference number 16 in the figures marks the means, with the aid of which it is ensured that the device according to the invention remains in place, in such a way that the forks, pivoted at one end around a pivot pin 17, place their ends around the spoke, thus preventing the device from lifting off the during operation. Preferably the forks of the means 16 operate together, in which case they rotate around the pivot pin 17 in a symmetrical manner, being connected to each other, typically by gearing. It is also preferable for the means 16 to be attached to the edge of the drive wheel 14 in such a way that they can be slid along the outer edge of the disc to the desired position, which ensures that the means 16 can be moved precisely to the location of a spoke of the hand wheel of the valve and locked around it. The number of the means 16 can be selected as desired, generally they are a few. The means 16 can also be constructed to be detachable and to only be set in place when required.

If necessary, the components 16 can be locked to the ring, in which case they can also be used in addition to/in place of the pins to receive the torsional force.

There is a desired number, in any event several, of collars 13/pins 15. The device also operates excellently as a general-purpose device, for example, with roughly the pin density shown in the figures. The number is chosen according to the application if the device is made for a specific application, in which the type of valve is known.

As stated above, the components for improving the control of the total device 1, which are marked in the figures with the reference numbers 5, 6 and 7, are optional. They are only one example of the means that can be used, if such are needed at all. There are other alternatives too. The same also applies to the means 16.

In practice, the operation of the embodiment is as follows. The device is connected by a suitable connector, for example, to a network supplying compressed aid, or in the case of an electrically powered device to the electricity network. The torsion head 4 is slid around the valve spindle 9 and the device laid against the handwheel 10. The pins 15 coinciding with the spokes of the handwheel then retract while the others settle into the spaces between the spokes. The means 16 are attached if necessary, as are the support arms 5, 6 and 7. The direction of rotation of the device is selected, i.e. the valve closing or opening direction and rotation is started for as long as needed to achieve the desired degree of opening or closing. After this, the device is detached from the valve.

Though above reference is only made to valves, it will be self-evident to one versed in the art that a device according to the invention can also be used for other kinds of operation, in which a rotating motion plays an important part.

In relation to valves, it can be further stated that the device according to the invention is also highly suitable for opening and closing valves, in which the spindle does not rise above the plane of the torsion wheel, but, as stated, the invention particularly permits the opening and closing of valves, in which the spindle rises above the torsion wheel. It should be further stated that the diameter of the drive wheel 14 and also the location and the number of the pin/collar combinations 13, 15 on the drive wheel are defined case-specifically, but in the basic construction preferably in such a way that the construction will suit most valve constructions.

Other variations, which are not separately mentioned, but which remain within the scope of protection of the inventive idea and the accompanying claims, are possible. For instance the pins 15 may be in a retracted condition inside the collar-like components 13, wherefrom they can be pushed out for connecting into the handwheel 10 of the valve for instance pneumatically. Those pins which are located just above the spokes of the handwheel cannot, naturally, be pushed out and they remain inside the collar-like components. Those pins, on the other hand, which are located between the spokes will be pushed out. It is also possible that the pins can be retracted for instance pneumatically after the use.

## Claims

1. Device for opening and closing valves or similar, the device (1), being adapted to be connected to the valve when in the operating situation and creating a rotating motion, the device (1) comprising a torsion head (4) having a rotatable drive wheel (14), which can be connected to a handwheel (10) of the valve, wherein several pins (15) are movable inwards and outwards in the drive wheel (14), **characterized in that** the pins (15) are arranged in collar-like components (13) which are attached to the drive wheel (14), wherein when in the operating situation:
- the pins (15) are adapted to retract into the collar-like components (13) against a spring force or a pneumatic force when they strike an obstacle such as a spoke of the handwheel (10);
- or the pins (15) are adapted to be pushed out of the collar-like components (13) in an essentially free space for connecting to the handwheel (10) of the valve, whereas the pins (15) located above the spokes of the handwheel (10) cannot be pushed out and remain inside the collar-like components.

2. Device according to claim 1, **characterized in that** the collar-like components are attached to the drive wheel (14) at essentially right angles to its plane.

3. Device according to any of the above claims, **characterized in that** in the device there is an auxiliary arm (5, 6, 7), which in the operating situation rests on the valve body, in order to provide additional support against the torsion force.

4. Device according to any of the above claims, **characterized in that** the torsion head (4) of the device (1), a shaft component (12) starting from it, and its drive wheel (14) are equipped with a central opening to allow the passage of a valve spindle (9), when in the operating situation.

5. Device according to any of the above claims, **characterized in that** attachment means (16, 17) are connected to the drive wheel (14) for attachment to a spoke of the valve.

6. Device according to claim 5, **characterized in that** the attachment means (16, 17) can be slid along the circumference of the drive wheel (14).

7. Device according to claim 5, **characterized in that** the attachment means (16, 17) can be locked in place in order to receive forces.

8. Device according to any of the above claims, **characterized in that** the device is powered by compressed air and its direction of rotation can be changed.

## Patentansprüche

1. Vorrichtung zum Öffnen und Schließen von Ventilen o. ä., wobei die Vorrichtung (1) geeignet ist, mit einem Ventil in der Bediensituation verbunden zu sein, und eine Drehbewegung erzeugt, wobei die Vorrichtung (1) einen Torsionskopf (4) mit einem drehbaren Antriebsrad (14) aufweist, das mit einem Handrad (10) des Ventils verbunden sein kann, wobei mehrere Stifte (15) im Antriebsrad (14) einwärts und auswärts beweglich sind, **dadurch gekennzeichnet, dass** die Stifte (15) in kragenartigen Komponenten (13) angeordnet sind, die am Antriebsrad (14) befestigt sind, wobei in der Bediensituation:
- die Stifte (15) geeignet sind, sich in die kragenartigen Komponenten (13) gegen eine Federkraft oder eine pneumatische Kraft zurückzuziehen, wenn sie auf ein Hindernis stoßen, z. B. eine Speiche des Handrads (10);
- oder die Stifte (15) geeignet sind, aus den kragenartigen Komponenten (13) in einem im Wesentlichen freien Raum zum Verbinden mit dem Handrad (10) des Ventils ausgeschoben zu werden, wogegen die über den Speichen des Handrads (10) liegenden Stifte (15) nicht ausgeschoben werden können und innerhalb der kragenartigen Komponenten bleiben.

2. Vorrichtung nach Anspruch 1, **dadurch gekennzeichnet, dass** die kragenartigen Komponenten am Antriebsrad (14) im Wesentlichen in rechten Winkeln zu dessen Ebene befestigt sind.

3. Vorrichtung nach einem der vorstehenden Ansprüche, **dadurch gekennzeichnet, dass** sich in der Vorrichtung ein Hilfsarm (5, 6, 7) befindet, der in der Bediensituation auf dem Ventilkörper ruht, um für zusätzliche Abstützung gegen die Torsionskraft zu sorgen.

4. Vorrichtung nach einem der vorstehenden Ansprüche, **dadurch gekennzeichnet, dass** der Torsionskopf (4) der Vorrichtung (1), eine von ihm ausgehende Wellenkomponente (12) und sein Antriebsrad (14) mit einer Mittelöffnung ausgestattet sind, um den Durchgang einer Ventilspindel (9) in der Bediensituation zu ermöglichen.

5. Vorrichtung nach einem der vorstehenden Ansprüche, **dadurch gekennzeichnet, dass** Befestigungseinrichtungen (16, 17) mit dem Antriebsrad (14) zur Befestigung an einer Speiche des Ventils verbunden sind.

6. Vorrichtung nach Anspruch 5, **dadurch gekennzeichnet, dass** die Befestigungseinrichtungen (16, 17) am Umfang des Antriebsrads (14) entlang verschoben werden können.

7. Vorrichtung nach Anspruch 5, **dadurch gekennzeichnet, dass** die Befestigungseinrichtungen (16, 17) an Ort und Stelle arretiert werden können, um Kräfte aufzunehmen.

8. Vorrichtung nach einem der vorstehenden Ansprüche, **dadurch gekennzeichnet, dass** die Vorrichtung druckluftbetrieben ist und ihre Drehrichtung geändert werden kann.

## Revendications

1. Dispositif destiné à ouvrir et fermer des soupapes ou similaires, le dispositif (1) étant adapté pour être raccordé à la soupape en situation de fonctionnement et créant un mouvement rotatif, le dispositif (1) comprenant une tête de torsion (4) ayant une roue motrice rotative (14) qui peut être raccordée à un volant (10) de la soupape, dans lequel plusieurs goupilles (15) sont mobiles vers l'intérieur et vers l'extérieur dans la roue motrice (14), **caractérisé en ce que** les goupilles (15) sont agencées dans des composants en forme de collerette (13) qui sont arrimés à la roue motrice (14), dans lequel en situation de fonctionnement :
- les goupilles (15) sont adaptées pour se rétracter dans les composants en forme de collerette (13) contre une force de ressort ou une force pneumatique lorsqu'ils heurtent un obstacle tel qu'un rayon du volant (10) ;
- ou les goupilles (15) sont adaptées pour être poussées hors des composants en forme de collerette (13) dans un espace essentiellement libre pour raccordement au volant (10) de la soupape, alors que les goupilles (15) situées au-dessus des rayons du volant (10) ne peuvent pas être poussées dehors et restent à l'intérieur des composants en forme de collerette.

2. Dispositif selon la revendication 1, **caractérisé en ce que** les composants en forme de collerette sont arrimés à la roue motrice (14) à angle essentiellement droit par rapport à son plan.

3. Dispositif selon l'une quelconque des revendications précédentes, **caractérisé en ce que**, dans le dispositif, se trouve un bras auxiliaire (5, 6, 7) qui, en situation de fonctionnement, repose sur le corps de soupape afin de fournir un support supplémentaire contre la force de torsion.

4. Dispositif selon l'une quelconque des revendications précédentes, **caractérisé en ce que** la tête de torsion (4) du dispositif (1), un composant d'arbre (12) partant de celle-ci, et sa roue motrice (14), sont équipés d'une ouverture centrale pour permettre le passage d'une tige de soupape (9) en situation de fonctionnement.

5. Dispositif selon l'une quelconque des revendications précédentes, **caractérisé en ce que** des moyens d'arrimage (16, 17) sont raccordés à la roue motrice (14) pour raccordement à un rayon de la soupape.

6. Dispositif selon la revendication 5, **caractérisé en ce que** les moyens d'arrimage (16, 17) peuvent coulisser le long de la circonférence de la roue motrice (14).

7. Dispositif selon la revendication 5, **caractérisé en ce que** les moyens d'arrimage (16, 17) peuvent être verrouillés en place afin de recevoir des forces.

8. Dispositif selon l'une quelconque des revendications précédentes, **caractérisé en ce que** le dispositif est alimenté par de l'air comprimé et son sens de rotation peut être modifié.
